# EUROPÄISCHE PATENTSCHRIFT

(11) **EP 3 437 528 B1**
(45) Veröffentlichungstag und Bekanntmachung des Hinweises auf die Patenterteilung: **08.09.2021**
(21) Anmeldenummer: 18185438.1
(22) Anmeldetag: 25.07.2018
(51) Int. Cl.: A47J 31/44

(54) **CREMA-AUFSCHÄUMER**
CREMA FOAMER
DISPOSITIF DE MOUSSAGE

(30) Priorität: 04.08.2017 DE 102017213603
(43) Veröffentlichungstag der Anmeldung: 06.02.2019
(73) Patentinhaber: BSH Hausgeräte GmbH, 81739 München (DE)
(72) Erfinder: Ohlhafer, Olaf, 74391 Erligheim (DE); Meyer, Klaus, 70442 Stuttgart-Feuerbach (DE)

(56) Entgegenhaltungen:
- WO-A1-03/105644
- WO-A1-2016/096913
- DE-T2- 60 206 041
- DE-T2- 60 300 385
- US-A- 3 212 757
- US-A1- 2012 003 373

## Beschreibung

Die Erfindung betrifft einen Blasengenerator, insbesondere für Haushaltszwecke, zum Erzeugen einer Crema auf einem Getränk sowie ein Handgerät und ein Getränkegerät zur Zubereitung von kaffeebasierten Getränken mit einem derartigen Blasengenerator.

Die EP 2 425 754 A1 zeigt eine Vorrichtung zum Aufschäumen einer Flüssigkeit umfassend eine Kammer, die mit Zuführeinrichtungen zum Zuführen der zu schäumenden Flüssigkeit und Aufschäumgas versehen ist, und Auslassmittel zum Auslassen von aufgeschäumter Flüssigkeit und zum Ablassen überschüssigen Aufschäumgases. Bei der Zufuhr von überschüssiger Luft kann die Schaumqualität noch erreicht werden, nämlich durch Ablassen der überschüssigen Luft, wobei das Zusammenwirken der überschüssigen Luft mit der aufgeschäumten Flüssigkeit vermieden wird. Die Auslassmittel können ein einzelnes rohrförmiges Element umfassen, um sowohl eine Strömung von aufgeschäumter Flüssigkeit als auch eine Strömung von überschüssiger Luft auszulassen. Auch die DE 603 00 385 T2 und die WO 2016/096913 A1 zeigen Vorrichtungen zum Aufschäumen mit Kammern und Luftzufuhr.

Aufgabe der Erfindung ist es, auf heißen wie auf kalten Getränken eine feinblasige Crema zu erzeugen.

Diese Aufgabe wird erfindungsgemäß durch einen Blasengenerator zum Erzeugen einer Crema auf einem Getränk gelöst, der einen axial durchströmbaren Mischraum mit einem in Strömungsrichtung betrachtet oberen Fluideingang mit einem Mündungsquerschnitt umfasst, der wesentlich geringer ist als ein mittlerer bzw. durchschnittlicher Querschnitt des Mischraums selbst, mit einem unteren Fluidausgang und mit einer Luftzufuhrleitung, die in einem in Strömungsrichtung betrachtet oberen Abschnitt des Mischraums mündet. Der Blasengenerator umfasst also im Wesentlichen einen Mischraum, dessen Gestalt weitgehend beliebig, zum Beispiel kubisch sein kann, vorzugsweise aber zylindrisch ausgebildet ist. Er ist entlang einer Raumachse, bei einem Zylinder vorzugsweise entlang der Zylinderachse durchströmbar, wofür es im Wesentlichen einander gegenüber liegende Fluideingänge braucht. Die Dimensionierung des oberen Fluideingangs mit einem wesentlich geringeren Mündungsquerschnitt als einem durchschnittlichen Querschnitt des Mischraums erzeugt in Strömungsrichtung eine Aufweitung, in die die Luftzufuhrleitung mündet. Ein durch den oberen Fluideingang einströmendes und den Mischraum im Wesentlichen axial durchströmendes Fluid reißt Luft aus der Luftzufuhrleitung mit sich und vermischt sich intensiv mit ihr. Dabei entsteht ein Schaum aus Luftbläschen, die von der Flüssigkeit umhüllt sind. Der Schaum tritt am unteren Fluidausgang als Crema aus. Mit der Anordnung der Luftzufuhrleitung in einem oberen Abschnitt des Mischraums ergibt sich eine möglichst lange Strömungs- bzw. Mischstrecke bis zum unteren Fluidausgang. Daher ist der Mischraum bzw. der Blasengenerator in axialer bzw. in Strömungsrichtung vorzugsweise ein Vielfaches länger ausgebildet als orthogonal dazu.

Nach einer vorteilhaften Ausgestaltung der Erfindung kann der obere Fluideingang zur Strömungsrichtung bzw. zur Achse des Mischraums geneigt ausgerichtet sein. Die Neigung des Fluideingangs kann beispielsweise 30 Grad, 45, 50 oder 60 Grad betragen und verleiht dem einströmenden Fluid innerhalb der Mischkammer einen vom gradlinigen Verlauf abweichenden Verlauf, indem es auf eine den Mischraum begrenzende Seitenfläche gerichtet ist und dort abprallt. Das Abprallen des einströmenden Fluid erzeugt eine Aufweitung seines Strahls, die zu einer gute Durchmischung des Fluids mit Luft führt. Je intensiver die Durchmischung des Fluids mit Luft erfolgt, umso kleinere Bläschen der zukünftigen Crema sind zu erwarten.

Alternativ oder zusätzlich kann nach einer vorteilhaften Ausgestaltung der Erfindung der obere Fluideingang zur Achse des Blasengenerators bzw. zur Achse seines Mischraums exzentrisch angeordnet sein. Auch eine Exzentrizität seiner Mündung im Mischraum führt zu einer Verwirbelung und damit zu einer gewünschten guten Vermischung, wie oben beschrieben. Exzentrisch kann der Fluideingang sowohl in einer Deckfläche eines beispielsweise allgemein (also nicht zwingend kreis-) zylindrischen Mischraums münden oder in dessen Seiten- bzw. Mantelfläche. Zusammen mit einer Neigung des Fluideingangs kann seine exzentrische Anordnung zu besonders günstigen Strömungsverhältnissen führen: Das Fluid erhält dadurch einen Drall bzw. einen schraubenförmigen Verlauf im Mischraum und damit axiale und tangentiale Strömungsanteile. Sie sorgen für hohe Scherkräfte und damit für eine effektive Durchmischung des Fluids mit der Luft. Sowohl die Exzentrizität als auch die Neigung bieten also jeweils eine Variable für die Anordnung des Fluideingangs, um eine optimale Vermischung zwischen Fluid und Luft zu erzeugen.

Die Vermischung ist darüber hinaus auch von der Querschnittsform des Mischraums in Strömungsrichtung abhängig. Während ein runder Querschnitt dem Fluid eine gleichmäßige und konstante Richtungsänderung verleiht, sorgt ein beispielsweise sechseckiger Querschnitt für wiederholtes Aufprallen des Fluids an den Seitenflächen des Mischraums und damit für eine effektive Durchmischung des Fluids mit der Luft.

Nicht nur die Verwirbelung des Fluids innerhalb des Mischraums, sondern auch die Einströmrichtung der Luft kann einen Beitrag für eine möglichst gute Durchmischung zwischen Fluid und Luft leisten. Nach einer weiteren vorteilhaften Ausgestaltung der Erfindung kann daher die Mündungsrichtung der Luftzufuhrleitung in den Mischraum in Strömungsrichtung ausgerichtet und axial bzw. im Querschnitt des Mischraums betrachtet zentral angeordnet sein. Die Luftzufuhrleitung wird folglich vom Fluid verwirbelt umströmt, was eine möglichst gleichmäßige Durchmischung von Fluid und Luft erwarten lässt. Je besser die Durchmischung, umso kürzer kann der Mischweg innerhalb des Mischraums und folglich der Mischraum selbst ausgebildet sein. Eine effektive Durchmischung kann also zu einem insgesamt kompakteren Aufbau des Blasengenerators führen.

Nach einer weiteren vorteilhaften Ausgestaltung der Erfindung kann der Mischraum über eine Drossel am in Strömungsrichtung betrachtet unteren Abschnitt verfügen. Dies führt zu einem Druckanstieg stromauf der Drossel und zu einer Druckentlastung stromab, die die Bläschenstruktur zu kleineren Bläschen hin verbessert. Die Drossel trägt also dazu bei, größere Bläschen zu zerteilen und eine feinere und damit standfestere Crema zu erzeugen.

Nach einer weiteren vorteilhaften Ausgestaltung der Erfindung kann der Blasengenerator über ein benutzerseitig bedienbares Ventil zur Steuerung der Getränkeabgabe verfügen, das stromab des Mischraums oder an seinem Auslass angeordnet ist. Zur Bedienung des Ventils kann ein Schalter dienen. Er kann als Ein-/Ausschalter ausgebildet sein oder als Schiebeschalter auch stufenlose Positionen zwischen dem offenen und dem geschlossenen Zustand des Ventils erlauben. Damit kann die Getränkeabgabe in ein bereitgestelltes Getränkegefäß manuell gesteuert werden.

Die eingangs genannte Aufgabe wird auch durch ein Getränkegerät zum Erzeugen einer Crema auf einem Getränk gelöst, das einen Getränkebehälter zur Aufnahme und zur gezielten Abgabe des zu verarbeitenden Getränks aufweist, außerdem einen Blasengenerator nach einem der obigen Ausgestaltungsformen und eine Pumpe zum druckbeaufschlagten Transport des Getränks vom Getränkebehälter durch den Blasengenerator hindurch. Das Getränkegerät kann in einer einfachsten Form als ein kompaktes Handgerät ausgebildet sein. Es kann sich mit einem zu verarbeitenden Getränk befüllen lassen und nach Aktivierung der Pumpe gegebenenfalls noch an dem benutzerseitig bedienbaren Ventil steuern lassen. Damit kann jedem Getränk, unabhängig von seiner Herkunft aus einem anderen Zubereitungsgerät oder einer sonstigen beliebigen Quelle, mit einer feinen Crema versehen werden.

Die eingangs genannte Aufgabe wird auch durch ein Getränkezubereitungsgerät zur Zubereitung von Kaffee-basierten Getränken, insbesondere ein solches für Haushaltszwecke, gelöst, das eine Zubereitungskammer für das zuzubereitende Getränk umfasst, einen stromab der Zubereitungskammer angeordneten Getränkeauslass und eine fluidische Leitungsverbindung dazwischen, wobei der Blasengenerator nach einem der obigen Ausführungsformen und stromauf des Getränkeauslasses angeordnet ist. Bei dem Zubereitungsgerät kann es sich um eine klassische Kaffeemaschine oder einen Kaffeevollautomaten zur Herstellung von heißgebrühtem Kaffee handeln. Alternativ kann es sich um ein Zubereitungsgerät für kaltgebrühten Kaffee handeln, beispielsweise wie in der Anmeldung mit der Anmeldernummer 201700727 desselben Anmelders vom selben Tage beschrieben. Sie wird diesbezüglich auch zum Inhalt der vorliegenden Anmeldung gemacht. Der Blasengenerator jedenfalls kann in gleicher Weise sowohl den heiß- als auch den kaltgebrühten Kaffee mit einer feinblasigen Crema versehen. In ein Zubereitungsgerät integriert bedarf der Blasengenerator in der Regel keiner separaten Bedienung durch den Benutzer mehr, weil er sich vom Zubereitungsgerät aus steuern und in dessen Bedienungsprogramme problemlos integrieren lässt.

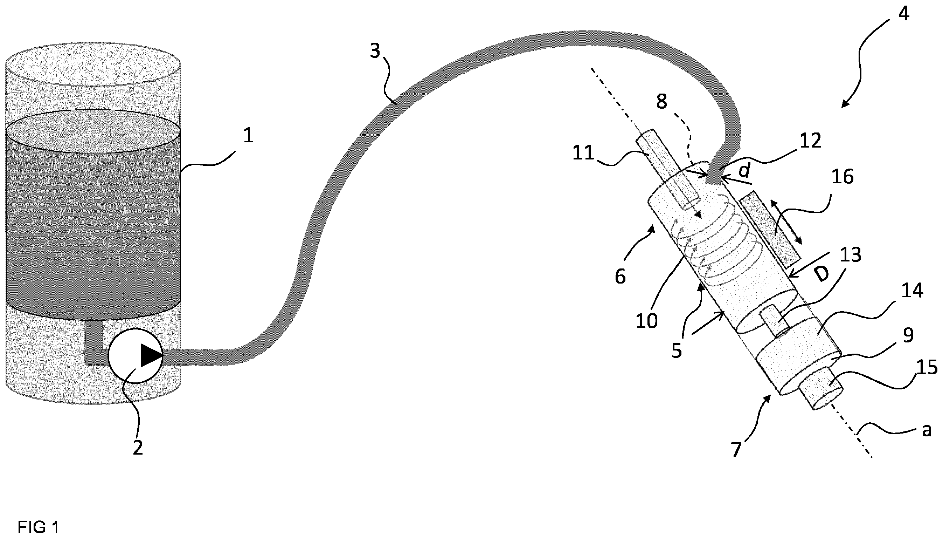

Das Prinzip der Erfindung wird im Folgenden anhand einer Zeichnung beispielshalber noch näher erläutert. In der Zeichnung zeigt die einzige Figur ein Handgerät, das einen zylindrischen Flüssigkeitsbehälter 1 mit einer darin integrierten Pumpe 2 umfasst, von der ein flexibler Fluidschlauch 3 zu einem Blasengenerator 4 führt. Der Blasengenerator 4 umfasst im Wesentlichen eine zylindrische Mischkammer 5 als axial durchströmbarem Mischraum mit einem konstanten Durchmesser D, mit einem oberen Ende 6 und einem unteren Ende 7. Als gerade Kreiszylinder verfügt die Mischkammer 5 über eine Rotationsachse a, eine scheibenförmige obere Deckfläche 8 und eine ebensolche untere Deckfläche 9 sowie über eine gekrümmte Mantelfläche 10. Die obere Deckfläche 8 durchtritt ein axial angeordneter rohrförmiger Lufteinlass 11. Am oberen Ende 6 der Mischkammer 5 und in der Nähe ihrer oberen Deckfläche 8 sitzt auf der Mantelfläche 10 ein oberer Fluideingang 12 und bildet damit einen fluidischen Anschluss der Fluidleitung 3 an die Mischkammer 5. Der Fluideingang 12 sitzt nicht nur exzentrisch bezüglich der Rotationsachse a, sondern seine Mündungsrichtung ist auch gegenüber der Rotationsachse a der Mischkammer 5 geneigt angeordnet. Sein Durchmesser d ist um ein vielfaches geringer als der Durchmesser D der Mischkammer 5, etwa um den Faktor Fünf bis Zehn.

In der unteren Hälfte der Mischkammer 5 ist eine fluidische Drossel 13 axial angebracht, die in einen kurzen Expansionsraum 14 mündet, von dem ein axial angeordnetes Ventil 15 in der unteren Deckfläche 9 der Mischkammer 5 ausgeht. Zur Steuerung des Ventils 15 dient ein Schiebeschalter 16, der benutzerzugänglich auf der Mantelfläche 10 der Mischkammer 5 angebracht ist. Er erlaubt das Öffnen und Schließen des Ventils 15, aber auch Zwischenstellungen.

Zum Betrieb des Handgeräts lässt sich der Flüssigkeitsbehälter 1 mit einer aufzuschäumenden Flüssigkeit, zum Beispiel mit Kaffee füllen. Die Pumpe 2 fördert den Kaffee über die Fluidleitung 3 zum Blasengenerator 4. Der Kaffee gelangt über den Fluideingang 12 bezüglich der Rotationsachse a der Mischkammer außermittig und geneigt in die zylindrische Mischkammer 5. Seine außermittige Mündung und eine Neigung verleihen dem Fluidstrom einen axialen und einen tangentialen Strömungsanteil. Der erheblich größere Durchmesser D der Mischkammer 5 ermöglicht der tangentialen Strömungskomponente des einströmenden Kaffees den Aufbau einer Wirbelstruktur innerhalb der Mischkammer 5. Zusätzlich saugt der einströmende Kaffee Luft durch den axialen Lufteinlass 11 an. Die auf der Rotationsachse a der Mischkammer 5 einströmende Luft aus dem Lufteinlass 11 vermischt sich mit dem verwirbelten Kaffee, sodass es zu einer guten Vermischung von Luft und Kaffee zu einem blasendurchsetzten Luft-Kaffee-Gemisch kommt.

Nachströmender Kaffee aus der Fluidleitung 3 drückt das Luft-Kaffee-Gemisch durch die Drossel 13. Auf Grund ihrer Verengung und die darin auftretenden Scherkräfte werden größere Luftbläschen in kleinste Bläschen innerhalb des Luft-Kaffee-Gemisches zerlegt, sodass sogenannte "ultrafine bubbles" entstehen. Nach der Drossel 13 gelangt das Luft-Kaffee-Gemisch in den Expansionsraum 14. Das Ventil 15 sorgt innerhalb des Expansionsraums 14 noch einmal für einen Druckanstieg mit anschließender Druckentlastung, sobald das Luft-Kaffee-Gemisch das Ventil 15 passiert hat. Von dort gelangt es in eine Tasse oder ein Glas. Die Ausgabe des Luft- Kaffee-Gemischs lässt sich über die Betätigung des Schiebeschalters 16 fein dosieren und damit sowohl die Abgabegeschwindigkeit als auch die Bläschenstruktur beeinflussen, um möglichst ultra-feine Bläschen zu erhalten. Sie sorgen für einen homogenen, feinporigen und stabilen Schaum, die Crema, der bzw. die mindestens 30 Minuten erhalten bleibt.

Da es sich bei dem vorhergehenden, detailliert beschriebenen Handgerät um ein Ausführungsbeispiel handelt, kann es in üblicher Weise vom Fachmann in einem weiten Umfang modifiziert werden, ohne den Bereich der Erfindung zu verlassen. Insbesondere können auch die konkreten geometrischen Ausgestaltungen des Flüssigkeitsbehälters und des Blasengenerators in anderer Form als in der hier beschriebenen erfolgen. Ebenso kann der Fluidschlauch kürzer und die fluidischen Verbindung des Flüssigkeitsbehälters und des Blasengenerators in einer anderen, beispielsweise kompakteren Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Flüssigkeitsbehälter
- 2: Pumpe
- 3: Fluidleitung
- 4: Blasengenerator
- 5: Mischkammer
- 6: Oberes Ende
- 7: Unteres Ende
- 8: Obere Deckfläche
- 9: Untere Deckfläche
- 10: Mantelfläche
- 11: Lufteinlass
- 12: Fluideingang
- 13: Drossel
- 14: Expansionsraum
- 15: Ventil
- 16: Schiebeschalter

- a: Rotationsachse
- D: Durchmesser der Mischkammer 5
- d: Durchmesser des Fluideingangs 12

## Patentansprüche

1. Blasengenerator (4), insbesondere für Haushaltszwecke, zum Erzeugen einer Crema auf einem Getränk, mit einem axial durchströmbaren Mischraum (5), mit einem oberen Fluideingang (12) mit einem Mündungsquerschnitt, der wesentlich geringer ist als ein Querschnitt des Mischraums (5), mit einem unteren Fluidausgang (15), **gekennzeichnet durch** eine rohrförmige Luftzufuhrleitung (11), die in einem oberen Abschnitt des Mischraums (6) mündet.

2. Blasengenerator nach Anspruch 1, **dadurch gekennzeichnet, dass** der obere Fluideingang (12) zur Strömungsrichtung bzw. zur Achse des Mischraums (6) geneigt ausgerichtet ist, insbesondere um 30°, 45°, 50° oder 60°.

3. Blasengenerator nach Anspruch 1 oder 2, **dadurch gekennzeichnet, dass** der obere Fluideingang (12) am Mischraum (5) exzentrisch angeordnet ist.

4. Blasengenerator nach einem der Ansprüche 1 bis 3, **dadurch gekennzeichnet, dass** eine Mündungsrichtung der Luftzufuhrleitung (11) in den Mischraum (5) in Strömungsrichtung ausgerichtet und axial angeordnet ist.

5. Blasengenerator nach einem der Ansprüche 1 bis 4, **gekennzeichnet durch** eine Drossel (13) am in Strömungsrichtung betrachtet unteren Abschnitt des Mischraums (5).

6. Blasengenerator nach einem der Ansprüche 1 bis 5, **gekennzeichnet durch** ein benutzerseitig bedienbares Ventil (15, 16) stromab der Mischkammer (5) zur Steuerung der Getränkeabgabe.

7. Getränkegerät zum Erzeugen einer Crema auf einem Getränk, mit einem Getränkebehälter (1) zur Aufnahme des zu verarbeitenden Getränks, mit einem Blasengenerator (4) nach einem der Ansprüche 1 bis 6 und mit einer Pumpe (2) zum druckbeaufschlagten Transport des Getränks vom Getränkebehälter (1) durch den Blasengenerator (4) hindurch.

8. Getränkegerät zur Zubereitung von kaffeebasierten Getränken, insbesondere für Haushaltszwecke, mit einer Zubereitungskammer für das zuzubereitende Getränk, mit einem stromab der Zubereitungskammer angeordneten Getränkeauslass und einer fluidischen Leitungsverbindung dazwischen, **gekennzeichnet durch** einen Blasengenerator (4) nach einem der Ansprüche 1 bis 6 stromauf des Getränkeauslasses.

## Claims

1. Bubble generator (4), in particular for household purposes, for generating a crema on a beverage, with a mixing compartment (5) that can be flowed through axially, with an upper fluid inlet (12) with an opening cross-section that is significantly smaller than a cross-section of the mixing compartment (5), with a lower fluid outlet (15), **characterised by** a tube-shaped air supply line (11) that opens in an upper section of the mixing compartment (6).

2. Bubble generator according to claim 1, **characterised in that** the upper fluid inlet (12) is oriented with an incline in relation to the direction of flow or in relation to the axis of the mixing compartment (6), in particular by 30°, 45°, 50° or 60°.

3. Bubble generator according to claim 1 or 2, **characterised in that** the upper fluid inlet (12) is arranged eccentrically on the mixing compartment (5).

4. Bubble generator according to one of claims 1 to 3, **characterised in that** an opening direction of the air supply line (11) into the mixing compartment (5) is oriented in the direction of flow and arranged in an axial manner.

5. Bubble generator according to one of claims 1 to 4, **characterised by** a throttle (13) on the lower section of the mixing compartment (5) when viewed in the direction of flow.

6. Bubble generator according to one of claims 1 to 5, **characterised by** a valve (15, 16) that can be operated by the user, downstream of the mixing compartment (5), for controlling the dispensing of beverages.

7. Beverage appliance for generating a crema on a beverage, with a beverage container (1) for accommodating the beverage to be prepared, with a bubble generator (4) according to one of claims 1 to 6 and with a pump (2) for the pressurised transport of the beverage from the beverage container (1) and through the bubble generator (4).

8. Beverage appliance for preparing coffee-based beverages, in particular for household purposes, with a preparation chamber for the beverage to be prepared, with a beverage outlet arranged downstream of the preparation chamber and a fluid line connection therebetween, **characterised by** a bubble generator (4) according to one of claims 1 to 6 downstream of the beverage outlet.

## Revendications

1. Générateur de bulles (4), en particulier à des fins domestiques, pour la création d'une mousse sur une boisson, avec une chambre de mélange (5) traversable axialement, avec une entrée de fluide supérieure (12) avec une section transversale d'embouchure significativement plus petite qu'une section transversale de la chambre de mélange (5), avec une sortie de fluide inférieure (15) **caractérisé par** un conduit d'alimentation en air tubulaire (11), qui débouche dans une section supérieure de la chambre de mélange (6).

2. Générateur de bulles selon la revendication 1, **caractérisé en ce que** l'entrée de fluide supérieure (12) est orientée de façon inclinée, en particulier de 30°, 45°, 50° ou 60° par rapport au sens d'écoulement resp. à l'axe de la chambre de mélange (6).

3. Générateur de bulles selon la revendication 1 ou 2, **caractérisé en ce que** l'entrée de fluide supérieure (12) est disposée de façon excentrique sur la chambre de mélange (5).

4. Générateur de bulles selon l'une des revendications 1 à 3, **caractérisé en ce que** la direction de débouchage de la conduite d'alimentation en air (11) dans la chambre de mélange (5) est orientée dans le sens d'écoulement et disposée axialement.

5. Générateur de bulles selon l'une des revendications 1 à 4, **caractérisé par** un étrangleur (13) sur la section inférieure de la chambre de mélange (5), dans le sens d'écoulement.

6. Générateur de bulles selon l'une des revendications 1 à 5, **caractérisé par** une soupape (15, 16) actionnable par l'utilisateur, en aval de la chambre de mélange (5) pour commander l'écoulement de la boisson.

7. Appareil à boissons pour la création d'une mousse sur une boisson, avec un contenant à boissons (1) pour l'accueil de la boisson à traiter, avec un générateur de bulles (4) selon l'une des revendications 1 à 6 et avec une pompe (2) pour le transport sous pression de la boisson du contenant à boissons (1) à travers le générateur de bulles (4).

8. Appareil à boissons pour la préparation de boissons à base de café, en particulier à des fins domestiques, avec une chambre de préparation pour la boisson à préparer, avec une sortie de boissons disposée en aval de la chambre de préparation et une liaison fluidique entre celles-ci, **caractérisé par** un générateur de bulles (4) selon l'une des revendications 1 à 6, en amont de la sortie de boissons.
